# EUROPÄISCHE PATENTSCHRIFT

(11) **EP 3 855 866 B1**
(45) Veröffentlichungstag und Bekanntmachung des Hinweises auf die Patenterteilung: **31.12.2025**
(21) Anmeldenummer: 20153624.0
(22) Anmeldetag: 24.01.2020
(51) Int. Cl.: H04L 47/28, H04W 76/38, G06F 9/50, H04W 76/11, H04W 76/32

(54) **VERBESSERTE RESSOURCENNUTZUNG BEI SPEICHERUNG VON GTP-KONTEXTINFORMATIONEN IN EINEM MOBILFUNKNETZ**
ENHANCED RESOURCE USAGE UPON STORAGE OF GTP CONTEXT INFORMATION IN A MOBILE RADIO NETWORK
UTILISATION AMÉLIORÉE DES RESSOURCES LORS DE LA MÉMORISATION DES INFORMATIONS DE CONTEXTE GTP DANS UN RÉSEAU RADIO MOBILE

(43) Veröffentlichungstag der Anmeldung: 28.07.2021
(73) Patentinhaber: Deutsche Telekom AG, 53113 Bonn (DE)
(72) Erfinder: BERTRAM, Gabriel, 50969 Köln (DE)
(74) Vertreter: Maucher Jenkins Patent- und Rechtsanwälte

(56) Entgegenhaltungen:
- EP-A1- 3 035 601
- EP-A1- 3 375 154
- EP-A1- 3 496 468
- FLORIAN METZGER ET AL: "Exploratory Analysis of a GGSN's PDP Context Signaling Load", JOURNAL OF COMPUTER NETWORKS AND COMMUNICATIONS, vol. 2014, 1 January 2014 (2014-01-01), US, pages 1 - 13, XP055297829, ISSN: 2090-7141, DOI: 10.1155/2014/526231

## Beschreibung

Die Erfindung betrifft ein Verfahren zur besseren Nutzung von Speicherressourcen in einem Mobilfunknetz. Sie bezieht sich hierbei insbesondere auf die Freigabe von Speicherplatz, welcher in Systemen eines Mobilfunknetzes für die Speicherung von Kontextinformationen im Zusammenhang mit einem für die mobile Datenübertragung genutzten GTP-Tunnel belegt wird.

Mobile Daten werden innerhalb eines Mobilfunknetzes unter Nutzung des GPRS-Protokolls über einen für eine jeweilige Datenverbindung in dem Mobilfunknetz aufgebauten GTP-Tunnel (GTP = GPRS Tunneling Protocol mit GPRS = General Packet Radio Service) übertragen. Bei einem dem Aufbau einer Datenverbindung vorausgehenden Aufbau eines GTP-Tunnels für die Datenverbindung werden in den Systemen eines Mobilfunknetzes zu dem jeweiligen GTP-Tunnel Kontextinformationen in einer Reihe von Systemen des Mobilfunknetzes gespeichert.

Bei diesen Kontextinformationen handelt sich insbesondere um Angaben zu einem die Datenverbindung und damit zuvor den GTP-Tunnel aufbauenden Endgerät, nämlich die MSISDN (Mobile Subscriber Integrated Services Digital Network Number) eines mit dem Endgerät genutzten SIM (Subscriber Identification Module) und um den APN (Access Point Name) als Referenz für ein den GTP-Tunnel auf der Gegenseite terminierendes Gateway zu dem externen Datennetz, in welchem sich das gewünschten Verbindungsziel befindet. Darüber hinaus werden Informationen zur Art der aufgebauten Verbindung, nämlich dazu, ob es sich um eine 2G/3G-Verbindung, also um eine Datenverbindung in einem Mobilfunknetz der zweiten (GMS) oder dritten Generation (UMTS), oder um eine 4G-Verbindung, also um eine Datenverbindung in einem Mobilfunknetz der vierten Generation (LTE), handelt, sowie sonstige Steuerinformationen gespeichert. Im Zusammenhang mit dem Aufbau von 2G/3G-Verbindungen werden derartige Kontextinformationen zum Beispiel im SGSN, dem Serving GPRS Support Node, und/oder im GGSN, dem Gateway GPRS Support Node, gespeichert. Für 4G-Datenverbindungen erfolgt die Speicherung entsprechender Informationen beispielsweise im P-GW (Packet Data Network Gateway) und/oder im S-GW (Serving Gatway).

Im Hinblick auf die ständig steigende Zahl für unterschiedlichste Zwecke genutzter mobiler Datenverbindungen wird in den Systemen eines jeweiligen Mobilfunknetzes für die Speicherung der vorgenannten Informationen für die Vielzahl der Verbindungen ein beträchtlicher Speicherplatz benötigt. Normalerweise wird der jeweilige, für eine solche Datenverbindung beziehungsweise für den von ihr genutzten GTP-Tunnel zur Speicherung der Kontextinformationen benötigte Speicherplatz mit dem Beenden aller über den betreffenden Tunnel geführten Datenverbindungen aufgrund einer im Zusammenhang damit erfolgenden Signalisierung des Abbaus des GTP-Tunnels wieder freigegeben. Jedoch kann diese Freigabe aus unterschiedlichsten Gründen unterbleiben, so dass der für eine Datenverbindung belegte Speicherplatz gegebenenfalls auch noch längere Zeit nach der Beendigung der Verbindung als belegt gekennzeichnet ist und nicht zur Speicherung von Kontextinformationen zu von anderen Datenverbindungen genutzten GTP-Tunneln oder von sonstigen Daten verwendet werden kann.

Entsprechendes kann beispielsweise eintreten, wenn ein mobiles Endgerät, welches eine oder mehrere mobile Datenverbindungen aufgebaut hat, sich in einem Bereich ohne Mobilfunkabdeckung bewegt, so dass die Signalisierung eines Abbaus des GTP-Tunnels unterbleibt. Ursächlich für das unnötige Verbleiben von Kontextinformationen zu mobilen Datenverbindungen können aber auch fehlerhafte Implementierungen in oder Schäden an mobilen Endgeräten sowie Störungen im Mobilfunknetz selbst sein. Hinzu kommt, dass im Falle des internationalen Datenroamings nicht alle Systeme in der Verantwortung eines Netzbetreibers sind, so dass der Abbau von Kontextinformationen häufig nicht durchgängig gewährleistet ist.

Insbesondere auch im Zusammenhang mit der sehr stark zunehmenden Nutzung von Machine to Machine-Verbindungen (M2M) und der damit verbundenen steigenden Anzahl von Endgeräten sowie der weiteren Entwicklung von IoT-Anwendungen (IoT = Internet of Things), kann die unnötige Belegung von Kapazitäten beziehungsweise Ressourcen in einem Mobilfunknetz in zunehmendem Maße ein Problem darstellen.

Aus diesem Grund ist es bekannt geworden, in Systemen eines Mobilfunknetzes für jeden GTP-Tunnel einen sogenannten GTP Idle Timer zu führen. Unter Nutzung dieses GTP Idle Timers werden, unabhängig von der Signalisierung eines Tunnelabbaus zeitgesteuert, nämlich nach Ablauf eines Zeitraums ohne einen Austausch von Nutzdaten über den jeweiligen GTP-Tunnel, die zu dem betreffenden GTP-Tunnel in den Systemen des Mobilfunknetzwerks gehaltenen GTP-Kontextinformationen gelöscht, so dass der entsprechende Speicherplatz wieder freigegeben wird. Der Zeitraum, nach welchem die Kontextinformationen zu einem jeweiligen GTP-Tunnel zeitgesteuert gelöscht werden, wird durch den Ablauf des zugehörigen, wie bereits ausgeführt, ebenfalls in einem der Systeme des Mobilfunknetzes geführten Idle Timers bestimmt.

Allerdings ist eine sinnvolle Dimensionierung des GTP Idle Timers im Hinblick auf die zahlreichen unterschiedlichen Anwendungsfälle für mobile Datenverbindungen sehr schwierig. Während zum Beispiel für Massenmarktanwendungen, wie die Benutzung von Smartphones oder Tablets für den Internetzugriff, ein GTP Idle Timer von wenigen Stunden üblicherweise ausreichen wird, wären für viele M2M-Anwendungen GTP Idle Timer, welche deutlich längere Zeiträume für das Unterbleiben eines Datenaustauschs festlegen, sinnvoll.

Aufgabe der Erfindung ist es, ein alternatives Verfahren bereitzustellen, welches im Zusammenhang mit der Speicherung von GTP-Kontexten im Mobilfunk unter Beachtung der vorgenannten Aspekte eine verbesserte Nutzung der Ressourcen, also insbesondere der Ressource Speicherplatz in den Systemen des Mobilfunknetzes, ermöglicht.

Aus der EP 3 496 468 A1 ist eine Lösung bekannt, gemäß welcher ein für eine Kommunikationsbeziehung zwischen einem Heimnetzwerk und einem besuchten Netzwerk sinnvoller Wert für den Idle Timer der GTP-Verbindung dadurch festgelegt wird, dass von einem Endgerät eine Signalisierungsnachricht generiert wird, die einen Wert enthält, welcher die maximal inaktive Zeit des Endgeräts angibt. Dieser Wert wird durch eine die Nachricht von dem Endgerät empfangende Roaming-Firewall ausgelesen und von dieser als Idle Timer für das Auslesen der GTP-Tunnelverbindung verwendet. Jedoch erfordert diese Vorgehensweise die Aussendung einer diesen Wert enthaltenden Signalisierungsnachricht durch das betreffende Endgerät. Hierbei handelt es sich aber nicht um eine bislang schon standardisierte Signalisierungsnachricht.

Die EP 3 375 154 A1 befasst sich unter anderem mit der Festlegung von Werten für einen Timer, welcher eine Verfallszeit angibt, nach der die in einem Proxy zu den von diesem weitergeleiteten Datenpaketen gespeicherten Headerdaten (wie Daten zum genutzten Netzdienst und/oder Metadaten) verworfen werden sollen.

Die Aufgabe wird durch ein Verfahren mit den Merkmalen des Patentanspruchs 1 gelöst. Vorteilhafte Aus- und Weiterbildungen der Erfindung sind durch die Unteransprüche gegeben.

Gemäß dem zur Lösung der Aufgabe vorgeschlagenen Verfahren wird eine bessere Nutzung von Speicherressourcen in einem Mobilfunknetz dadurch erreicht, dass die Kontextinformationen zu einem GTP-Tunnel, also Informationen, welche beim Aufbau eines GTP-Tunnels für den Datenaustausch zwischen einem Endgerät und einem Gateway zu einem externen Datennetz in Speichern der Systeme des Mobilfunknetzes abgelegt werden, unabhängig von der Signalisierung eines Abbaus des GTP-Tunnels zeitgesteuert wieder gelöscht werden und somit der durch sie belegte Speicherplatz freigegeben wird. Wie grundsätzlich bereits bekannt, erfolgt diese zeitgesteuerte Löschung der GTP-Kontextinformationen, welche in den Systemen des Mobilfunknetzes in Zuordnung zu einem aus der MSISDN eines von dem Endgerät verwendeten SIM und zu einem APN des über den GTP-Tunnel mit dem Endgerät verbundenen Gateways gespeichert werden, unter Nutzung eines GTP Idle Timers. Die Kontextinformationen werden hierbei unabhängig von der Signalisierung eines Abbaus des GTP-Tunnels nach Ablauf eines Zeitraums ohne einen Austausch von Nutzdaten über den GTP-Tunnel gelöscht, welcher durch den Ablauf des in den Systemen des Mobilfunknetzes (gemäß der Erfindung explizit) zu diesem jeweiligen GTP-Tunnel geführten GTP Idle Timers bestimmt wird. Im Zusammenhang mit der MSISDN und dem APN, welche den Kontextinformationen zu einem durch sie eindeutig (weltweit einmalig) bezeichneten GTP-Tunnel zugeordnet sind, soll nachfolgend verkürzend und beide Merkmale (MSISDN und APN) zusammenfassend von einem GTP-Identifikator gesprochen werden.

Abweichend vom Stand der Technik erfolgt die zeitgesteuerte Löschung der GTP-Kontextinformationen gemäß dem vorgeschlagenen Verfahren explizit für einen durch seinen GTP-Identifikator eindeutig bestimmten GTP-Tunnel und dabei zeitvariabel, das heißt, nicht bestimmt durch einen einmalig statisch festgelegten Timer. Dazu wird der zu einem dedizierten GTP-Kontext (dediziert durch den vorgenannten GTP-Identifikator) geführte GTP Idle Timer durch einen automatisierten, von einer Verarbeitungseinrichtung des den GTP Idle Timer haltenden Systems des Mobilfunknetzes, jeweils ausgehend von einem Startwert, in Abhängigkeit von der jeweiligen Verbindungsart, einmalig oder mehrfach ausgeführten iterativen Prozess (Iterationsprozess) sukzessive an die hinsichtlich der Datenruhedauer für die jeweilige Verbindungsart bestehenden Erfordernisse von dem Endgerät ausgehender respektive aufgebauter, den GTP-Tunnel nutzender Datenverbindungen angepasst. Bei diesem Iterationsprozess (synonym auch nur als Iteration bezeichnet) wird wiederholt ein Vergleich zwischen dem jeweils aktuell für den GTP Idle Timer eingestellten Wert und einer zyklisch, nämlich jeweils zum Zeitpunkt dieses Vergleichs abgefragten Dauer des Ausbleibens eines Nutzungsdatenaustauschs über den bestehenden GTP-Tunnel (im Weiteren auch als Datenruhedauer bezeichnet) durchgeführt und der GTP Idle Timer jeweils in Abhängigkeit des Ergebnisses dieses Vergleichs verändert.

Vorzugsweise ist das Verfahren dabei so gestaltet, dass bei der für einen bestimmten GTP-Kontext erstmaligen Ausführung des Iterationsprozesses als Startwert für den Timerwert des GTP Idle Timers ein in einem der Systeme des Mobilfunknetzes für alle Datenverbindungen, unabhängig von ihrer Art, hinterlegter initialer Wert verwendet wird. Dieser initiale Wert wird dann durch die ein- oder mehrmalige Ausführung des gemäß der Erfindung vorgesehenen Iterationsprozesses an die hinsichtlich der Datenruhedauer bestehenden Erfordernisse der Datenverbindungen angepasst, welche von dem das SIM mit der jeweiligen MSISDN verwendenden Endgerät bis zu einem das Endgerät mit einem Datennetz verbindenden Gateway mit zugehörigem APN über einen GTP-Tunnel aufgebaut werden.

Mit Hilfe des erfindungsgemäßen Verfahrens wird zum einen gewährleistet, dass in Systemen des Mobilfunknetzes GTP-Kontextinformationen nicht unnötig lange gespeichert und insbesondere auch im Falle eines unvermittelten Abbruchs einer oder mehrerer über einen GTP-Tunnel geführter Datenverbindungen und dadurch ausbleibender Signalisierung für den Abbau des GTP-Tunnels gelöscht werden. Andererseits wird durch die zeitvariable Löschung der Kontextinformationen erreicht, dass hierbei die für unterschiedliche Arten von Datenverbindungen, im Hinblick auf unterschiedlich sinnvolle Timergrößen, bestehenden Erfordernisse gebührend berücksichtigt werden. Hierdurch kann beispielsweise erreicht werden, dass in Verbindung mit für die Übertragung von Sprachdaten genutzten GTP-Tunneln ein GTP Idle Timer mit einem vergleichsweise kleinen Timerwert (zum Beispiel vier Stunden) zur Anwendung kommt, wohingegen für Datenverbindungen zu Steuerzwecken, zum Beispiel im Kontext des Internet of Things (IoT), deutlich längere Pausenphasen für den Datenaustausch zugelassen werden, ohne dass, im letztgenannten Anwendungsfall, währenddessen GTP-Kontextinformationen gelöscht werden und ein jeweiliger GTP-Kontext unnötigerweise wiederholt neu aufgebaut werden muss.

Entsprechend einer möglichen Implementierung des Verfahrens kann die wiederholte Ausführung des Iterationsprozess für denselben, das heißt durch denselben GTP-Identifikator bezeichneten GTP-Tunnel so ablaufen, dass der dabei wiederholt mit der Datenruhedauer verglichene Timerwert des GTP Idle Timers
a) nach dem jeweiligen Vergleich um einen Verringerungswert verringert sowie der entsprechend verringerte Timerwert als neuer Timerwert gespeichert wird, solange der Timerwert bei einem Vergleich größer ist als die jeweils zum Vergleichszeitpunkt festgestellte Datenruhedauer, wobei der Timerwert aber nach einem erstmaligen Unterschreiten der Datenruhedauer, unter Beendigung des ausgeführten Iterationsprozesses sowie bei gleichzeitiger Löschung der Kontextinformationen zu dem durch den GTP-Identifikator bezeichneten GTP-Tunnel, wieder um den Betrag seiner letztmaligen Verringerung (Betrag des Verringerungswertes) erhöht und der entsprechend erhöhte Timerwert als neuer Timerwert gespeichert wird,
b) nach dem jeweiligen Vergleich um einen Erhöhungswert erhöht sowie der entsprechend erhöhte Timerwert als neuer Timerwert gespeichert wird, sofern der Timerwert bei dem Vergleich geringer ist als die jeweils zum Vergleichszeitpunkt festgestellte Datenruhedauer, wobei nach jeder Erhöhung des Timerwertes die Kontextinformationen zu dem durch den GTP-Identifikator bezeichneten GTP-Tunnel gelöscht werden und der Iterationsprozess beendet wird.

Gemäß dem hier und in den Patentansprüchen zugrunde gelegten Verständnis kann es sich bei dem zuvor genannten Verringerungswert auch um einen Faktor (Multiplikationsfaktor < 1) handeln, so dass es sich bei einem unter dessen Anwendung verringerten Timerwert jeweils um einen Bruchteil des vorherigen Timerwertes handelt. Analoges gilt für den Erhöhungswert, aus dessen Anwendung auf einen Timerwert ein (nicht zwingend ganzzahliges) Vielfaches des vorhergehenden Timerwertes resultiert.

Für die Ausführung des zuvor dargestellten Verfahrens werden zwei grundsätzliche Varianten vorgeschlagen. Gemäß einer ersten grundsätzlichen Verfahrensvariante wird demnach der Iterationsprozess mit dem dabei erfolgenden mehrmaligen Vergleich des jeweils aktuellen Timerwertes für den GTP Idle Timers mit der zum Vergleichszeitpunkt festgestellten Datenruhedauer nur solange wiederholt, bis ein bei der letzten Ausführung des Iterationsprozesses ermittelter Timerwert entsprechend einem dafür festgelegten Abbruchkriterium als final gekennzeichnet wird. Künftig wird dann im Zusammenhang mit Datenverbindungen, die unter Nutzung desselben GTP-Tunnels und somit desselben GTP-Kontextes hergestellt und für den Datenaustausch genutzt werden, stets der Timerwert für den GTP-Timer verwendet, der mit dem Eintritt des Abbruchkriteriums festgelegt worden ist. Der jeweils im Ergebnis einer Ausführung des Iterationsprozesses für den durch seinen GTP-Identifikator eindeutig identifizierbaren GTP-Kontext ermittelte Timerwert wird in Zuordnung zu diesem GTP-Identifikator in einer Tabelle gespeichert. Der entsprechende Tabellenwert bleibt dann folglich bei Eintritt des Abbruchkriteriums fortan unverändert.

Bei einer Ausgestaltung der ersten Verfahrensvariante mit einem Ablauf entsprechend der zuvor erläuterten Implementierung kann eine Beendigung des Iterationsprozesses gemäß a) oder b) dieses vorstehend genauer dargestellten Ablaufs das Abbruchkriterium darstellen, bei dessen Eintritt der dabei ermittelte Timerwert als final gekennzeichnet wird.

Gemäß der zweiten grundsätzlichen Variante dient der bei einem Durchlauf des Iterationsprozesses mit dessen Beendigung ermittelte Timerwert stets nur als Startwert für den, im Falle des abermaligen Aufbaus desselben GTP-Kontextes zur weiteren Optimierung beziehungsweise Verfeinerung des Timerwertes des GTP Idle Timers, in jedem Falle immer wieder erneut ausgeführten Iterationsprozesses. Auch hierbei wird der jeweils ermittelte, den Startwert für den nächsten Iterationsprozess bildende Timerwert in Zuordnung zu dem den jeweiligen GTP-Kontext eindeutig identifizierenden GTP-Identifikator in einer Tabelle abgelegt. Bei beiden zuvor erläuterten Verfahrensvarianten ist es so, dass in einem der Systeme des Mobilfunknetzes eine Tabelle geführt wird, in welcher eine Mehrzahl von Timerwerten in jeweiliger Zuordnung zu einem ganz bestimmten GTP-Kontext, das heißt zu dem diesen Kontext (und damit auch den GTP-Tunnel selbst) identifizierenden GTP-Identifikator, gehalten werden. Zur Erinnerung sei an dieser Stelle nochmals darauf hingewiesen, dass der jeweilige GTP-Identifikator gebildet ist aus der MSISDN des mit dem den jeweiligen GTP-Tunnel aufbauenden Endgerätes verwendeten SIM (Subscriver Identification Modul) und der APN als dem Namen des im Rahmen einer Datenverbindung kontaktierten Gateways. Der jeweilige GTP-Identifikator ist dabei weltweit einmalig. Dies ergibt sich bereits daraus, dass bekanntlich die MSISDN eines SIM eine weltweit einmalig vergebene Nummer darstellt. Da allerdings unter Verwendung eines SIM mit einem entsprechenden Endgerät (auch gleichzeitig) mehrere Datenverbindungen unter Verwendung unterschiedlicher Gateways mit unterschiedlichen APN aufgebaut werden können, wird zur eindeutigen Bezeichnung eines jeweiligen GTP-Kontextes beziehungsweise GTP-Tunnels zusätzlich die jeweilige APN mit herangezogen. Ob eine Anpassung des Timerwertes bis zum Eintritt eines definierten Abbruchkriteriums oder immer wieder, unter ständiger weiterer Verfeinerung des Timerwertes erfolgt, ist ebenfalls eine Frage der Implementierung des Verfahrens. Es ist vorgesehen, dass für bestimmte Verbindungsarten, zum Beispiel VoLTE, das heißt Voice over LTE, nur eine Anpassung bis zum Erreichen eines festgelegten Abbruchkriterium vorgenommen wird, wohingegen der Timerwert des GTP Idle Timers für andere Verbindungsarten, wie zum Beispiel M2M (machine to machine), durch immer wieder erneute Ausführung des Iterationsprozesses beim Aufbau des jeweiligen GTP-Kontextes ständig weiter verfeinert wird. Dies kann dadurch bewerkstelligt werden, dass zusätzlich in Zuordnung zu GTP-Identifikatoren, welche bereits schon einmal aufgebaute GTP-Tunnel bezeichnen, nämlich vorzugsweise als Bestandteil der bereits angesprochenen Tabelle mit GTP-Identifikatoren und zugehörigen Timerwerten ein Kennzeichen dazu vermerkt wird, ob der in der Tabelle enthaltene Timerwert dauerhaft Gültigkeit haben oder durch ständig wiederholte Ausführung des Iterationsprozesses stets weiter verfeinert werden soll.

Bei dem vorgenannten zusätzlichen Kennzeichen kann es sich um eine Hilfsvariable "Idle_Timer_Minimum_gefunden" vom Typ Boolean handeln, welche auf "Ja" gesetzt ist, sofern der in einem durchlaufenen Iterationsprozess gefundene Timerwert für den GTP Idle Timer als optimaler, das heißt als für den betreffenden GTP-Kontext vermeintlich geringstmöglicher Timerwert angesehen wird. Diese Hilfsvariable kann im Zusammenhang mit einem Vergleich zwischen dem aktuell für den GTP Idle Timer eingestellten Timerwert und der jeweils festgestellten Datenruhedauer mit ausgewertet werden, mit der Folge, dass der Iterationsprozess unmittelbar wieder abgebrochen wird, sofern die Hilfsvariable den Wert "Ja" beziehungsweise "Wahr" aufweist. Der Timerwert für den GTP Idle Timer würde folglich nicht mehr durch abermalige Ausführung des Iterationsprozesses verfeinert, das heißt weiter optimiert werden.

Im anderen Fall, also beim Verzicht auf eine derartige Hilfsvariable, würde der Iterationsprozess mit jedem abermaligen Aufbau desselben GTP-Tunnels für dessen Kontext immer wieder ausgeführt und somit der Timerwert, im Zuge seiner fortwährenden Verfeinerung (fortgesetzten Optimierung), von Iterationsprozess zu Iterationsprozess immer um den tatsächlich bestmöglichen Timerwert herumschwingen, also zwischen einem zum tatsächlich bestmöglichen Timerwert nächsthöheren und nächstniedrigeren Wert wechseln (togglen).

Entsprechend einer möglichen Weiterbildung des vorgeschlagenen Verfahrens ist es vorgesehen, dass das Intervall, welche die Abstände festlegt, in denen während der Durchführung des Iterationsprozesses ein Vergleich zwischen dem aktuellen Wert des GTP Idle Timers und der Datenruhedauer erfolgt, dynamisch veränderlich ist. Dabei wird dieses Intervall jeweils an den aktuellen Timerwert des GTP Idle Timers angepasst, und zwar so, dass dieses Intervall geringfügig, vorzugsweise um wenige Minuten oder sogar nur um wenige Sekunden, größer ist als der jeweilige aktuelle (sich ja im Verlauf der Iteration ebenfalls verändernde) Timerwert.

Der GTP Idle Timer beziehungsweise die Tabelle mit unter Anwendung des Verfahrens diversifizierten Timerwerten und deren Zuordnung zu einem jeweiligen GTP-Identifikator werden in einem der Systeme des Mobilfunknetzes gehalten. Bei diesem System, welches außerdem eine Verarbeitungseinrichtung zur Ausführung des Iterationsprozesses aufweist, kann es sich beispielsweise bei einem 2G- oder 3G-Netz um den GGSN oder um den SGSN beziehungsweise bei einem 4G-Netzwerk um das P-GW oder das S-GW handeln.

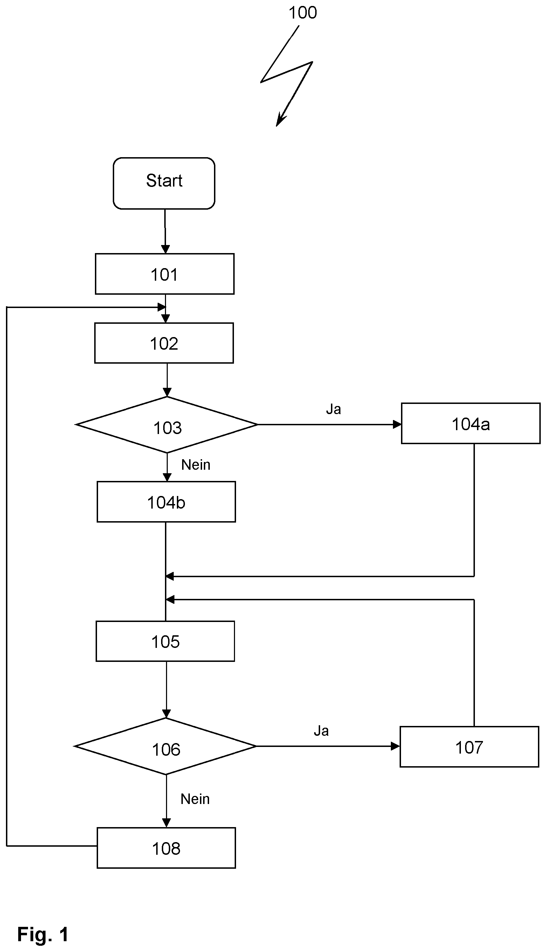

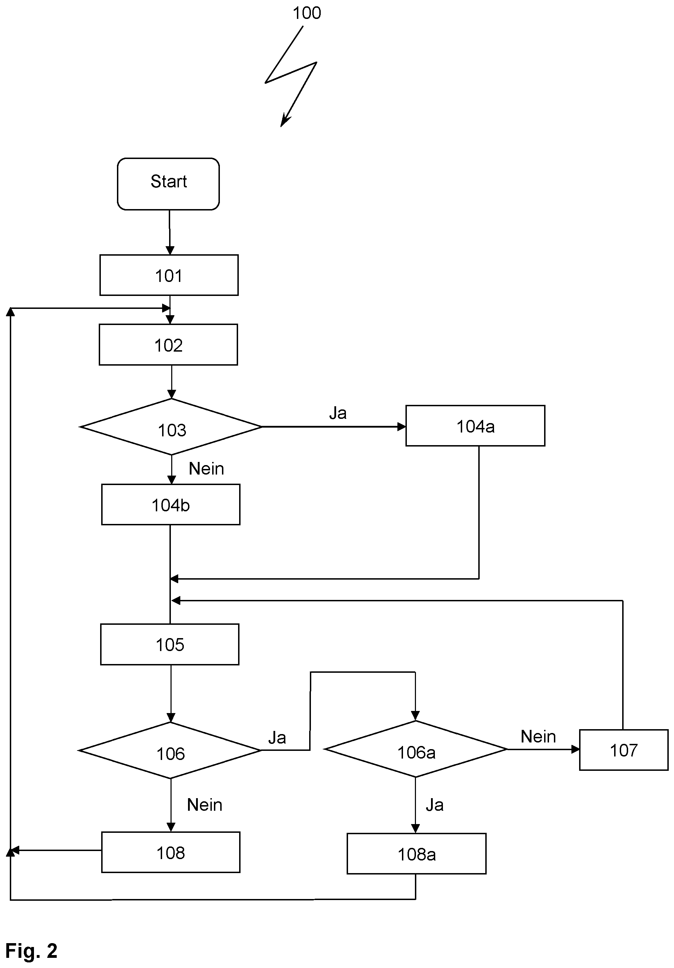

Ein Ausführungsbeispiel der Erfindung soll nachfolgend anhand zugehöriger Zeichnungen erläutert werden. Hierzu zeigen die Fig. 1 und die Fig. 2 für zwei mögliche Varianten einen Ablaufplan für das erfindungsgemäße Verfahren entsprechend einer möglichen Ausbildungsform.

Demnach gestaltet sich der Ablauf des Verfahrens 100 gemäß der Fig. 1 nach dem "START" wie folgt:

### Schritt 101:

Es werden mehrere Variablen initialisiert. So wird eine variable "initialer_idle_timeout" mit einem initialen Timerwert für den GTP Idle Timer belegt. Ferner werden eine Variable "steigerung_faktor" und eine Variable "verringerung_faktor" mit für die Erhöhung/Verringerung des Timerwertes während des Iterationsprozesses vorgesehenen Werten belegt.

### Schritt 102:

Es werden ein GTP-Tunnel und ein zugehöriger GTP-Kontext aufgebaut. Die zugehörigen Kontextinformationen werden in System des Mobilfunknetztes in Zuordnung zu der ihnen übermittelten MSISDN und dem APN, welche gemeinsam einen den GTP-Kontext (als einmalig auf der Welt) eindeutig bezeichnenden GTP-Identifikator darstellen, gespeichert.

### Schritt 103:

Es wird geprüft, ob in der in einem System des Mobilfunknetzes - zum Beispiel GGSN oder SGSN (2G/3G) beziehungsweise P-GW oder S-GW (4G) - gehaltenen Tabelle zu dem durch den GTP-Identifikator bezeichneten GTP-Tunnel (GTP-Kontext) bereits ein Eintrag für den Timerwert vorliegt. Ist dies der Fall, so wird Schritt 104a ausgeführt, anderenfalls Schritt 104b, mit:

### Schritt 104a:

Der in der Tabelle in Zuordnung zu dem GTP-Identifikator gehaltene Timerwert wird als Startwert für die sich anschließende Iteration verwendet.

### Schritt 104b:

Als Startwert (Start-Timerwert) für die sich anschließende Iteration wird ein in einem der Systeme des Mobilfunknetzes für alle Datenverbindungen, unabhängig von ihrer Art, hinterlegter initialer Wert verwendet.

Die nachfolgenden Schritte, also der Ablauf der eigentlichen Iteration soll(en) nachfolgend zunächst allgemein und dann beispielhaft für zwei, im Hinblick auf die Gegebenheiten beim Eintritt in die Ablaufschleifen der Iteration unterschiedliche Szenarien anhand konkreter Zahlenwerte erläutert werden. Hierbei soll von einem anfänglichen Timerwert (unabhängig davon, ob es sich bei diesem um den bereits angesprochenen initialen Wert oder um einen bei einer vorhergehenden Ausführung des Iterationsprozesses ermittelten Timerwert handelt) von 24 h (Stunden) sowie von einem als Faktor 0,5 ausgebildeten Verringerungswert und einem als Faktor 2 (Verdoppelung) ausgebildeten Erhöhungswert ausgegangen werden.

Des Weiteren bezeichnen "SIM_Idle_Timeout" den jeweils aktuellen Timerwert (den Timerwert des GTP Idle Timers für den durch das SIM mit einmaliger MSISDN und APN bestimmten GTP-Kontext) und "SIM_Context_Idle" die Datenruhedauer (den Zeitraum ohne Datenaustausch über den durch das SIM mit einmaliger MSISDN und APN bestimmten GTP-Kanal mit zugehörigem GTP-Kontext).

### Schritt 105:

Warten mit der Ausführung eines ersten Vergleiches zwischen aktuellem Timerwert und Datenruhedauer, für einen Zeitraum, der in jedem Falle zumindest geringfügig größer ist als der aktuelle Timerwert (z. B. 24,5 h).

### Schritt 106:

Vergleich: "SIM_Context_Idle" < "SIM_Idle_Timeout"?. Verzweigen zu Schritt 107, im Falle der Antwort "Ja", oder zu Schritt 108, im Falle der Antwort "Nein".

### Schritt 107:

Setzen eines neuen Timerwerts mit "SIM_Idle_Timeout = verringerung_faktor * SIM_ Idle_Timeout. Speichern des neuen Timerwerts, das heißt von "SIM_Idle_Timeout" in Zuordnung zu GTP-Identifikator (MSISDN+APN) in der dafür vorgesehenen Tabelle. Erneute Ausführung von Schritt 105 und der ihm folgenden Schritte.

### Schritt 108:

Setzen eines neuen Timerwerts mit "SIM_Idle_Timeout = erhöhung_faktor * SIM_Idle_Timeout. Speichern des neuen Timerwerts, das heißt von "SIM_Idle_Timeout" in Zuordnung zu GTP-Identifikator (MSISDN+APN) in der dafür vorgesehenen Tabelle, Löschen der Kontextinformationen zu dem GTP-Identifikator und damit vorläufige Beendigung des Iterationsprozesses.

Im Anschluss an eine gemäß Schritt 108 erfolgende Beendigung des Iterationsprozesses wird der Iterationsprozess erneut ausgeführt, sobald derselbe GTP-Kanal, also wieder ein GTP-Kanal mit zugehörigem GTP-Kontext aufgebaut wird, welcher durch denselben GTP-Identifikator bezeichnet wird. Der Wiedereinstieg in die Iteration erfolgt dabei mit dem Aufbau des betreffenden GTP-Kanals, also mit dem Schritt 102.

Die zuvor allgemein erläuterten Schritte 105 bis 108 sollen nun, wie angekündigt, nochmals anhand zweier möglicher Szenarien betrachtet werden.
1. Szenario: Der Timerwert ist beim Eintritt in die Iterationsschleifen (ab Schritt 106) "zu hoch", mit - wie gesagt - 24h, wobei zum Zeitpunkt des Eintritts in die Iteration eine Dauer von 4 h ohne Datenaustausch über den aufgebauten GTP-Tunnel (Datenruhedauer) ausgegangen wird. Der Iterationsprozess verläuft mit dem gewählten Zahlenbeispiel bei seiner mehrmaligen Ausführung wie nachfolgend angegeben:
   In dem sich an die Wartezeit (Schritt 105 - Ablauf des Intervalls für Vergleich) anschließenden Schritt 106 wird in einer ersten Iteration festgestellt, dass der Zeitraum ohne Nutzdatendatenaustausch (4 h) kleiner ist als der gewählte GTP Idle Timer (24 h) für diesen GTP Kontext. Daher wird der gewählte Timerwert des GTP Idle Timers gemäß Schritt 107 halbiert auf 12 h und mit Verweis auf MSISDN und APN gespeichert. In einer zweiten Iteration wird in Schritt 106 erneut festgestellt, dass der Zeitraum ohne Nutzdatendatenaustausch (4 h) kleiner ist als der aktuelle GTP Idle Timer (12 h) für diesen GTP Kontext. Daher wird der Timerwert des GTP Idle Timers nochmals gemäß Schritt 107 halbiert auf 6 h und mit Verweis auf MSISDN und APN gespeichert. In einer dritten Iteration wird in Schritt 106 wiederum festgestellt, dass der Zeitraum ohne Nutzdatendatenaustausch, also die Datenruhedauer, (4 h) kleiner ist als der aktuelle Timerwert des GTP Idle Timers (6 h) für diesen GTP Kontext. Daher wird der Timerwert des GTP Idle Timer abermals gemäß Schritt 107 halbiert auf 3 h und mit Verweis auf MSISDN und APN gespeichert. In der vierten Iteration wird schließlich im Schritt 106 festgestellt, dass der Zeitraum ohne Nutzdatendatenaustausch (4 h) größer ist als der aktuelle Timerwert des GTP Idle Timers (3 h) für diesen GTP Kontext. Daher wird gemäß Schritt 108 der GTP Kontext beendet und der Timerwert des GTP Idle Timers verdoppelt auf 6 h und mit Verweis auf MSISDN und APN gespeichert.
2. Szenario: Der Timerwert (24 h) ist beim Eintritt in die Iterationsschleifen (Schritt 106) "zu niedrig", wobei angenommen wird, dass für mit dem aufgebauten GTP-Tunnel genutzten Datenverbindungen eine Dauer von 7 Tagen = 168 Stunden typisch ist (Datenruhedauer). Der Iterationsprozess verläuft mit dem gewählten Zahlenbeispiel bei seiner mehrmaligen Ausführung wie nachfolgend angegeben:
   In dem sich an die Wartezeit (Schritt 105 - Ablauf des Intervalls für Vergleich) anschließenden Schritt 106 wird in einer ersten Iteration festgestellt, dass für diesen GTP Kontext die Datenruhedauer "SIM_Context_Idle" mit 168 h größer ist als der gewählte Timerwert des GTP Idle Timers "SIM_Idle_Timeout" mit 24 h. Daher wird gemäß Schritt 108 der GTP Kontext beendet und der gewählte (zum Beispiel initiale) Timerwert des GTP Idle Timers verdoppelt auf 48 h und mit Verweis auf MSISDN und APN gespeichert. In einer zweiten Iteration wird im Schritt 106 erneut festgestellt, dass der Zeitraum ohne Nutzdatendatenaustausch (168 h), also die Datenruhedauer, größer ist als der gewählte GTP Idle Timer (48 h) für diesen GTP Kontext. Daher wird wieder gemäß Schritt 108 der GTP Kontext beendet und der bis dahin aktuelle Timerwert des GTP Idle Timers verdoppelt auf 96 h sowie mit Verweis auf MSISDN und APN als neuer Timerwert gespeichert. In einer dritten Iteration wird im Schritt 106 festgestellt, dass der Zeitraum ohne Nutzdatendatenaustausch (168 h) immer noch größer ist als der aktuelle Timerwert des GTP Idle Timers (96 h) für diesen GTP Kontext. Daher wird gemäß Schritt 108 abermals der GTP Kontext beendet und der gewählte GTP Idle Timer verdoppelt auf 192 h und mit Verweis auf MSISDN und APN gespeichert. In einer vierten Iteration wird schließlich festgestellt, dass der Zeitraum ohne Nutzdatendatenaustausch (168 h) kleiner ist als der gewählte GTP Idle Timer (192 h) für diesen GTP Kontext. Der Iterationsprozess läuft nach dem nächsten Aufbau des bezüglich des GTP-Identifikators gleich GTP-Tunnels (desselben GTP-Tunnels) ab Schritt 105 in den Ablauf gemäß Szenario 1 hinein.

Bei jedem Aufbau eines GTP-Tunnels, also auch bei einem erneuten Aufbau eines zuvor schon hinsichtlich des Timerwertes seines GTP Idle Timer optimierten Tunnels (desselben GTP-Tunnels mit demselben GTP-Identifikator) würde die Iteration gemäß einem der beiden zuvor beschriebenen Szenarien erneut durchgeführt. Das heißt der Timerwert würde fortlaufend immer weiter verfeinert werden und dabei - wie früher schon ausgeführt - gewissermaßen togglen. Die Szenarien 1 und 2 würden sich nach nur jeweils einem Vergleich (das heißt nach jeweils einem Durchlauf der Iteration) ständig im Wechsel einstellen.

Gemäß einer in der Fig. 2 gezeigten Verfahrensvariante kann es aber vorgesehen sein, dass beim Eintritt in den Schritt 108 - damit selbstverständlich auch im Zusammenhang mit dessen Ausführung bei einem Ablauf des Iterationsprozesses gemäß Szenario 1 - eine Hilfsvariable "Idle_Timer_Minimum_gefunden" auf "Ja" gesetzt wird. Diese Hilfsvariable wird gemäß Fig. 2 in Schritt 106a mit "Idle_Timer_Minimum_gefunden?" abgeprüft und dadurch, sofern diese den Wert "Ja" hat, eine nochmalige Ausführung der Iteration und somit gegebenenfalls das zuvor angesprochene Togglen verhindert, indem infolge dessen in einen im "Ja"-Fall ausgeführten Schritt 108a, unter Beendigung der Iteration, lediglich eine Löschung des GTP-Kontextes ohne nochmalige Änderung und erneutes Abspeichern des Timerwertes für den GTP Idle Timer erfolgt. Somit würde der zu diesem Zeitpunkt ermittelte Timerwert künftig stets für den betreffenden, durch seinen GTP-Identifikator eindeutig identifizierbaren GTP-Tunnel verwendet werden. Die Hilfsvariable "Idle_Timer_Minimum_gefunden" müsste bei dieser Variante im Zuge der Initialisierung gemäß Schritt 101 auf den Anfangswert "Nein" gesetzt werden.

## Patentansprüche

1. Verfahren (100) zur besseren Nutzung von Speicherressourcen in einem Mobilfunknetz, indem Kontextinformationen, welche beim Aufbau eines GTP-Tunnels für den Datenaustausch zwischen einem Endgerät und einem Gateway zu einem Datennetz in Zuordnung zu einem aus der MSISDN eines von dem Endgerät verwendeten SIM und einem APN, das heißt einem Access Point Name des Gateways, gebildeten GTP-Identifikator in Speichern von Systemen des Mobilfunknetzes abgelegt werden, unabhängig von der Signalisierung eines Abbaus des GTP-Tunnels zeitgesteuert, nämlich nach Ablauf eines Zeitraums ohne einen Austausch von Nutzdaten über den GTP-Tunnel, gelöscht werden, wobei sich der Zeitraum, nach welchem die Kontextinformationen zu dem GTP-Tunnel zeitgesteuert gelöscht werden, durch den Ablauf eines in einem der Systeme des Mobilfunknetzes zu dem GTP-Tunnel geführten GTP Idle Timers bestimmt und wobei die GTP-Kontextinformationen zu dem GTP-Tunnel zeitvariabel gelöscht werden, **dadurch gekennzeichnet, dass** der zu dem GPT-Tunnel geführte GTP Idle Timer durch einen automatisierten, von einer Verarbeitungseinrichtung des den GTP Idle Timer haltenden Systems des Mobilfunknetzes ausgeführten Iterationsprozess, mit einem wiederholt durchgeführten Vergleich (106) zwischen einem jeweils aktuell für den GTP Idle Timer eingestellten Timerwert und einer aktuell festgestellten Datenruhedauer, nämlich einer jeweils zum Zeitpunkt des Vergleichs festgestellten Dauer des Ausbleibens eines Nutzdatenaustausches über den bestehenden GTP-Tunnel, sukzessive an die hinsichtlich der Datenruhedauer für die jeweilige Verbindungsart bestehenden Erfordernisse der von dem Endgerät aufgebauten, den GTP-Tunnel nutzenden Verbindungsarten angepasst wird, wobei der Iterationsprozess, jeweils ausgehend von einem Startwert für den Timerwert des GTP Idle Timers, in Abhängigkeit von der jeweiligen Verbindungsart, einmalig oder mehrfach ausgeführt wird.

2. Verfahren (100) nach Anspruch 1, **dadurch gekennzeichnet, dass** bei der erstmaligen Ausführung des Iterationsprozesses als Startwert für den Timerwert des GTP Idle Timers ein in einem der Systeme des Mobilfunknetzes für alle Datenverbindungen unabhängig von ihrer Art hinterlegter initialer Wert verwendet wird.

3. Verfahren (100) nach Anspruch 1 oder 2, **dadurch gekennzeichnet, dass** der bei der wiederholten Ausführung des Iterationsprozesses für denselben, das heißt durch denselben GTP-Identifikator bezeichneten GTP-Tunnel wiederholt mit der Datenruhedauer verglichene Timerwert des GTP Idle Timers
a.) nach dem jeweiligen Vergleich (106) um einen Verringerungswert verringert sowie der entsprechend verringerte Timerwert als neuer Timerwert gespeichert (107) wird, solange der Timerwert bei diesem Vergleich (106) größer ist als die jeweils zum Vergleichszeitpunkt festgestellte Datenruhedauer, wobei der Timerwert jedoch nach einem erstmaligen Unterschreiten der Datenruhedauer, unter Beendigung des gerade ausgeführten Iterationsprozesses sowie bei gleichzeitiger Löschung der Kontextinformationen zu dem durch den GTP-Identifikator bezeichneten GTP-Tunnel, wieder um den Betrag des Verringerungswertes erhöht und der entsprechend erhöhte Timerwert als neuer Timerwert gespeichert wird (108),
b.) nach dem jeweiligen Vergleich (106) um einen Erhöhungswert erhöht sowie der entsprechend erhöhte Timerwert als neuer Timerwert gespeichert wird (108), sofern der Timerwert bei dem Vergleich (106) geringer ist als die jeweils zum Vergleichszeitpunkt festgestellte Datenruhedauer, wobei nach jeder Erhöhung des Timerwertes die Kontextinformationen zu dem durch den GTP-Identifikator bezeichneten GTP-Tunnel gelöscht werden und der Iterationsprozess beendet wird (108).

4. Verfahren (100) nach einem der Ansprüche 1 bis 3, **dadurch gekennzeichnet, dass** im Falle eines erneuten Aufbaus eines GTP-Tunnels mit demselben GTP-Identifikator ein bei der letzten Ausführung des Iterationsprozesses ermittelter Timerwert ohne erneute Ausführung des Iterationsprozesses und damit ohne weitere Veränderung für den GTP Idle Timer verwendet wird, sofern der betreffende Timerwert entsprechend einem dafür festgelegten Abbruchkriterium als final gekennzeichnet und erkannt (106a) wurde.

5. Verfahren (100) nach Anspruch 4, wobei eine Beendigung des Iterationsprozesses gemäß Anspruch 3a) oder 3b) ein Abbruchkriterium darstellt und der beim Eintritt dieses Abbruchkriteriums ermittelte Timerwert als final gekennzeichnet wird.

6. Verfahren (100) nach Anspruch 1 bis 3, **dadurch gekennzeichnet, dass** im Falle eines erneuten Aufbaus eines GTP-Tunnels mit demselben GTP-Identifikator der Iterationsprozess stets erneut ausgeführt und dabei der bei der jeweils letzten Ausführung des Iterationsprozesses ermittelte Timerwert als Startwert für die erneute Ausführung Iterationsprozesses zur weiteren Anpassung des Timerwertes verwendet wird.

7. Verfahren (100) nach einem der Ansprüche 1 bis 6, **dadurch gekennzeichnet, dass** der wiederholte Vergleich (106) zwischen dem jeweils aktuell für den GTP Idle Timer eingestellten Timerwert und der zum Vergleichszeitpunkt jeweils festgestellten Datenruhedauer innerhalb des Iterationsprozesses in einem sich dynamisch verändernden Intervall (105) erfolgt, welches parallel mit dem sich während der Iteration verändernden Timerwert verkleinert oder vergrößert wird, aber in jedem Fall stets größer als der in dem dafür vorgesehenen System des Mobilfunknetzes abgelegte und daher stets bekannte aktuelle Timerwert.

8. Verfahren (100) nach einem der Ansprüche 1 bis 7, **dadurch gekennzeichnet, dass** der Timerwert des GTP Idle Timers für ein 2G- oder 3G-Mobilfunknetz in einem GGSN, also einem Gateway GPRS Support Node, oder in einem SGSN, also einem Serving GPRS Support Node abgelegt wird, in welchem auch der Iterationsprozess durch die dafür ausgebildete Verarbeitungseinrichtung ausgeführt wird.

9. Verfahren (100) nach einem der Ansprüche 1 bis 7, **dadurch gekennzeichnet, dass** der Timerwert des GTP Idle Timers für ein 4G-Mobilfunknetz in einem P-GW, also einem Packet Data Network Gateway, oder in einem S-GW, also einem Serving Gateway abgelegt wird, in welchem auch der Iterationsprozess durch die dafür ausgebildete Verarbeitungseinrichtung ausgeführt wird.

## Claims

1. Method (100) for improving the utilization of memory resources in a mobile communications network by storing context information, which is formed during the establishment of a GTP tunnel for data exchange between a terminal device and a gateway to a data network in association with a GTP identifier formed from the MSISDN of a SIM card used by the terminal device and an APN, i.e., an Access Point Name of the gateway, in memories of systems of the mobile communications network, and by deleting them independent of signaling of a degradation of the GTP tunnel in a time-controlled manner, i.e., after the expiration of a period of time without an exchange of user data via the GTP tunnel, wherein the period of time after which the context information relating to the GTP tunnel is deleted on a time-controlled basis is determined by the expiry of a GTP idle timer maintained in one of the systems of the mobile communications network for the GTP tunnel, and wherein the GTP context information relating to the GTP tunnel is deleted on a time-variable basis, **characterized in that** the GTP idle timer maintained for the GTP tunnel is successively adapted to the requirements existing with regard to the data idle period for the respective connection type of the connection types established by the terminal device and using the GTP tunnel by an automated iteration process executed by a processing device of the mobile communications network system maintaining the GTP idle timer, with a repeatedly performed comparison (106) between a timer value currently set in each case for the GTP idle timer and a currently determined data idle period, specifically a duration of the absence of a user data exchange via the existing GTP tunnel determined at the time of the comparison, wherein the iteration process is executed once or several times, starting in each case from a start value for the timer value of the GTP idle timer, depending on the respective connection type.

2. Method (100) according to claim 1, **characterized in that**, when the iteration process is executed for the first time, an initial value stored in one of the systems of the mobile communications network for all data connections, regardless of their type, is used as the start value for the timer value of the GTP idle timer.

3. Method (100) according to claim 1 or 2, **characterized in that**, during repeated execution of the iteration process for the same GTP tunnel, i.e., the one designated by the same GTP identifier, the timer value of the GTP idle timer, which is repeatedly compared with the data idle period,
a. is reduced by a reduction value after the respective comparison (106) and the correspondingly reduced timer value is stored (107) as the new timer value, as long as the timer value in this comparison (106) is greater than the data idle period determined at the respective comparison time, wherein the timer value, however, after falling below the data idle period for the first time, by terminating the iteration process currently being executed and simultaneously deleting the context information relating to the GTP tunnel designated by the GTP identifier, is increased again by the amount of the reduction value and the correspondingly increased timer value is stored as the new timer value (108),
b. is increased by an increase value after the respective comparison (106) and the correspondingly increased timer value is stored as the new timer value (108), provided that the timer value in the comparison (106) is less than the data idle period determined at the respective comparison time, wherein after each increase of the timer value, the context information relating to the GTP tunnel designated by the GTP identifier is deleted and the iteration process is terminated (108).

4. Method (100) according to one of claims 1 to 3, **characterized in that**, in the event of a GTP tunnel with the same GTP identifier being reestablished, a timer value determined during the last execution of the iteration process is used for the GTP idle timer without re-executing the iteration process and thus without further change, provided that the relevant timer value has been marked and recognized (106a) as final in accordance with a termination criterion specified for this purpose.

5. Method (100) according to claim 4, wherein a termination of the iteration process according to claim 3a) or 3b) constitutes a termination criterion and the timer value determined upon the occurrence of this termination criterion is marked as final.

6. Method (100) according to claims 1 to 3, **characterized in that**, in the event of a GTP tunnel being re-established with the same GTP identifier, the iteration process is always executed again, and the timer value determined during the last execution of the iteration process is used as the start value for the renewed execution of the iteration process for further adjustment of the timer value.

7. Method (100) according to one of claims 1 to 6, **characterized in that** the repeated comparison (106) between the timer value currently set in each case for the GTP idle timer and the data idle duration determined at the time of comparison within the iteration process takes place in a dynamically changing interval (105) which is reduced or increased in parallel with the timer value changing during the iteration, but in any case is always greater than the current timer value stored in the system provided for this purpose in the mobile communications network and therefore always known.

8. Method (100) according to one of claims 1 to 7, **characterized in that** the timer value of the GTP idle timer for a 2G or 3G mobile communications network is stored in a GGSN, i.e., a Gateway GPRS Support Node, or in an SGSN, i.e., a Serving GPRS Support Node, in which the iteration process is also executed by the processing device designed for this purpose.

9. Method (100) according to one of claims 1 to 7, **characterized in that** the timer value of the GTP idle timer for a 4G mobile communications network is stored in a P-GW, i.e., a Packet Data Network Gateway, or in an S-GW, i.e., a Serving Gateway, in which the iteration process is also executed by the processing device designed for this purpose.

## Revendications

1. Procédé (100) pour améliorer l'utilisation de ressources de mémoire dans un réseau de radiotéléphonie en effaçant des informations de contexte stockées dans des mémoires de systèmes du réseau de radiotéléphonie lors de la formation d'un tunnel GPT pour l'échange de données entre un terminal et une passerelle vers un réseau de données avec une affectation à un identifiant GPT formé du numéro MSISDN d'une SIM utilisée par le terminal et d'un APN, c'est-à-dire d'un nom de point d'accès de la passerelle, dans un délai contrôlé indépendamment de la signalisation d'une suppression du tunnel GPT, c'est-à-dire après l'expiration d'un intervalle de temps sans échange de données utiles via le tunnel GPT, dans lequel l'intervalle de temps après lequel les informations de contexte concernant le tunnel GPT sont effacées dans un délai contrôlé est déterminé par l'expiration d'un compteur de temps mort GPT tournant dans un des systèmes du réseau de radiotéléphonie et dans lequel les informations de contexte GPT concernant le tunnel GTP sont effacées dans un délai variable, **caractérisé en ce que** le compteur de temps mort GPT tournant dans le tunnel GPT est adapté successivement aux besoins existants des modes de connexion établis par le terminal et utilisant le tunnel GPT en ce qui concerne la durée de pause de données pour le type de connexion en question par un processus d'itération automatisé exécuté par une installation de traitement du système qui contient le compteur de temps mort GPT du réseau de radiotéléphonie, avec une comparaison (106) itérative entre une valeur de comptage actuellement réglée pour le compteur de temps mort GPT et une durée de pause de données actuellement constatée, c'est-à-dire une durée d'absence d'échange de données utiles via le tunnel GPT existant constatée au moment de la comparaison, le processus d'itération étant exécuté une ou plusieurs fois, chaque fois à partir d'une valeur de départ de comptage du compteur de temps mort GPT, en fonction du mode de connexion en question.

2. Procédé (100) selon la revendication 1, **caractérisé en ce que**, lors de la première exécution du processus d'itération, la valeur de départ utilisée pour la valeur de comptage du compteur de temps mort GPT est une valeur initiale stockée dans l'un des systèmes du réseau de radiotéléphonie pour toutes les connexions de données, indépendamment de leur type.

3. Procédé (100) selon la revendication 1 ou 2, **caractérisé en ce que** la valeur de comptage du compteur de temps mort GPT comparée de façon répétée à la durée de pause de données lors de l'exécution répétée du processus d'itération pour le même tunnel GPT, c'est-à-dire le tunnel GPT désigné par le même identifiant GTP,
a.) est diminuée après chaque comparaison (106) d'une valeur de diminution et la valeur de comptage ainsi diminuée est stockée comme nouvelle valeur de comptage (107) tant que la valeur de comptage est plus grande lors de cette comparaison (106) que la durée de pause de données constatée au moment de la comparaison correspondante, la valeur de comptage étant toutefois augmentée à nouveau de la valeur de diminution quand elle passe pour la première fois en dessous de la durée de pause de données, avec arrêt du processus d'itération en cours d'exécution et effacement simultané des informations de contexte concernant le tunnel GPT désigné par l'identifiant GPT, et la valeur de comptage ainsi augmentée est stockée comme nouvelle valeur de comptage (108),
b.) est augmentée après chaque comparaison (106) d'une valeur d'augmentation et la valeur de comptage ainsi augmentée est stockée comme nouvelle valeur de comptage (108) tant que la valeur de comptage est plus petite lors de la comparaison (106) que la durée de pause de données constatée au moment de la comparaison correspondante, les informations de contexte concernant le tunnel GPT désigné par l'identifiant GPT étant effacées et le processus d'itération arrêté (108) après chaque augmentation de la valeur de comptage.

4. Procédé (100) selon l'une des revendications 1 à 3, **caractérisé en ce que**, en cas de nouvelle création d'un tunnel GPT avec le même identifiant GPT, une valeur de comptage déterminée lors de la dernière exécution du processus d'itération est utilisée sans nouvelle exécution du processus d'itération, donc sans autre changement du compteur de temps mort GPT, si la valeur de comptage en question a été caractérisée et reconnue comme finale (106a) selon un critère d'interruption défini à cette fin.

5. Procédé (100) selon la revendication 4, dans lequel un arrêt du processus d'itération selon la revendication 3a) ou 3b) constitue un critère d'interruption et la valeur de comptage déterminée à l'apparition de ce critère d'interruption est caractérisée comme finale.

6. Procédé (100) selon les revendications 1 à 3, **caractérisé en ce que**, en cas de nouvelle création d'un tunnel GPT avec le même identifiant GPT, le processus d'itération est toujours exécuté à nouveau et la valeur de comptage déterminée lors de la dernière exécution du processus d'itération est alors utilisée comme valeur de départ pour la nouvelle exécution du processus d'itération afin de continuer l'adaptation de la valeur de comptage.

7. Procédé (100) selon l'une des revendications 1 à 6, **caractérisé en ce que** la comparaison répétée (106) entre la valeur de comptage actuellement réglée pour le compteur de temps mort GPT et la durée de pause de données constatée au moment de la comparaison correspondante a lieu au cours du processus d'itération dans un intervalle de temps (105) qui varie de façon dynamique, qui est diminué ou agrandi parallèlement au changement de la valeur de comptage au cours de l'itération, mais qui est dans tous les cas toujours plus grand que la valeur de comptage actuelle stockée dans le système du réseau de radiotéléphonie prévu à cette fin, donc toujours connue.

8. Procédé (100) selon l'une des revendications 1 à 7, **caractérisé en ce que** la valeur de comptage du compteur de temps mort GPT pour un réseau de radiotéléphonie 2G ou 3G est stockée dans un GGSN, c'est-à-dire un nœud de support GPRS de passerelle (Gateway GPRS Support Node), ou dans un SGSN, c'est-à-dire un nœud de support GPRS de desserte (Serving GPRS Support Node), dans lequel le processus d'itération est également exécuté par l'installation de traitement conçue à cette fin.

9. Procédé (100) selon l'une des revendications 1 à 7, **caractérisé en ce que** la valeur de comptage du compteur de temps mort GPT pour un réseau de radiotéléphonie 4G est stockée dans une P-GW, c'est-à-dire une passerelle de réseau à commutation de paquets (Packet Data Network Gateway), ou une S-GW, c'est-à-dire une passerelle de desserte (Serving Gateway), dans laquelle le processus d'itération est également exécuté par l'installation de traitement conçue à cette fin.
